# FASCICULE DE BREVET EUROPEEN

(11) **EP 3 166 862 B1**
(45) Date de publication et mention de la délivrance du brevet: **16.12.2020**
(21) Numéro de dépôt: 15735701.3
(22) Date de dépôt: 08.07.2015
(51) Int. Cl.: B65D 41/04, B29C 45/44, A45D 40/26, A45D 34/04

(54) **APPLICATEUR DE PRODUIT COSMÉTIQUE, NOTAMMENT DE MASCARA, ENSEMBLE D'UN TEL APPLICATEUR ET D'UN RÉCEPTACLE DUDIT PRODUIT, PROCÉDÉ ET DISPOSITIF DE FABRICATION DUDIT APPLICATEUR**
WIMPERNTUSCHE-APPLIKATOR, BEHÄLTER, HERSTELLUNGSVERFAHREN UND VORRICHTUNG
COSMETIC PRODUCT (MASCARA) APPLICATOR, RECEPTACLE, MANUFACTURING METHOD AND APPARATUS

(30) Priorité: 08.07.2014 FR 1456592
(43) Date de publication de la demande: 17.05.2017
(73) Titulaire: Albéa Services, 92230 Gennevilliers (FR)
(72) Inventeur: LIARD, Jérôme, 72380 Sainte Jamme sur Sarthe (FR)
(74) Mandataire: Gevers & Orès
(86) Numéro de dépôt international: PCT/EP2015/065640
(87) Numéro de publication internationale: WO 2016/005471

(56) Documents cités:
- EP-A1- 2 832 256
- EP-A2- 1 038 468
- EP-A2- 1 038 468
- DE-U1-202013 006 927
- DE-U1-202013 006 927
- US-A- 4 180 175
- US-A- 4 180 175

## Description

L'invention concerne un applicateur de produit cosmétique, un ensemble d'un tel applicateur et d'un réceptacle dudit produit ainsi qu'un procédé et un dispositif de fabrication dudit applicateur. Bien que plus particulièrement prévu pour du mascara, elle pourra également être utilisée avec du baume pour les lèvres ou tout autre produit cosmétique.

On connait des ensembles applicateurs pour produit cosmétique, notamment pour produit cosmétique destiné à être appliqué sur les cils tel que du mascara, comprenant un réceptacle contenant le produit cosmétique et un applicateur adapté pour être fixé de manière amovible sur le réceptacle. EP1038468 et EP2832256 en sont deux exemples.

Le réceptacle comprend généralement un corps, le corps comprenant des parois délimitant un espace dans lequel est contenu le produit cosmétique, et un col définissant une ouverture par laquelle le produit cosmétique peut être extrait, le col présentant un goulot.

L'applicateur comprend généralement un capot adapté pour être vissé sur le goulot, une tige s'étendant à partir du capot et un embout applicateur fixé à une extrémité libre de la tige. L'embout applicateur comprend une âme et une pluralité de protubérances ou de poils s'étendant à partir de l'âme. Lorsque le capot est fixé sur le goulot, la tige et l'embout applicateur s'étendent à l'intérieur du réceptacle. L'applicateur est immergé dans le produit cosmétique contenu dans le réceptacle. Pour utiliser l'applicateur, l'utilisateur détache le capot du goulot et extrait l'applicateur du réceptacle.

Pour éviter que l'applicateur ne soit trop chargé en produit cosmétique, le récipient comprend généralement un essoreur, fixé à l'intérieur du goulot. Lorsque l'utilisateur extrait l'applicateur du réceptacle, l'applicateur coulisse à l'intérieur de l'essoreur. L'essoreur racle le produit cosmétique en excès sur la tige et sur l'embout applicateur. L'essoreur permet ainsi de régler la quantité de produit présent sur l'embout applicateur et évite une application excessive de produit cosmétique sur les cils.

De tels applicateurs sont produits en grandes séries et il convient d'optimiser leurs procédés de fabrication. Ils sont ainsi formés de pièces issues de moulage afin de pouvoir être réalisés en grandes cadences.

Aujourd'hui, il est connu de prévoir les filets permettant le vissage et le dévissage de l'applicateur sur le réceptacle au niveau d'une pièce intégrant la tige de l'applicateur. Une telle pièce doit donc être démoulée selon un mouvement de rotation, correspondant à un dévissage de la pièce hors de son moule. Une telle opération allonge les temps de cycle et, par suite, les coûts de fabrication.

L'invention se propose de pallier les inconvénients précédents et concerne à cette fin un applicateur de produit cosmétique, notamment de mascara, ledit applicateur étant configuré pour être vissé sur un réceptacle dudit produit, ledit applicateur comprenant un capot, destiné à être manipulé par un utilisateur, une tige, destinée à porter un embout applicateur, et une zone d'interface, moulée, sur laquelle ledit capot et/ou ladite tige sont montés, ladite zone d'interface portant un filet de vissage dudit applicateur sur ledit réceptacle, ledit filet formant moins d'un tour, ledit applicateur comprenant en outre une pièce de liaison entre ladite tige et ledit capot, ladite zone d'interface étant formée dans ladite pièce de liaison.

Grâce à un tel filet, partiel, il est possible de démouler la pièce qui le porte de façon axiale. On simplifie de la sorte la fabrication de l'applicateur qui peut avoir lieu sans mouvement de rotation.

Ladite zone d'interface forme une pièce de liaison entre ladite tige et ledit capot. Autrement dit, il s'agit d'une pièce intermédiaire entre la tige et le capot. Dans une variante en dehors de l'invention, ladite zone d'interface pourra être issue de matière de la tige et/ou du capot.

Selon différents modes de réalisation de l'invention, qui pourront être pris ensemble ou séparément :
- ledit filet est angulairement interrompu,
- ledit filet comprend au moins deux tronçons,
- lesdits tronçons sont régulièrement répartis sur une périphérie de ladite zone d'interface,
- ladite pièce de liaison est moulée sur ladite tige,
- ladite pièce de liaison comprend un corps présentant une direction d'extension longitudinale, lesdits tronçons de filet étant formés sur ledit corps,
- ledit corps présente un évidement à l'aplomb desdits tronçons de filet, dans ladite direction d'extension longitudinale dudit corps,
- ledit corps présente une partie d'interface avec ledit capot et une partie d'interface avec ladite tige, ledit corps comprenant un épaulement entre lesdites parties d'interface,
- lesdits évidements sont réalisés au niveau dudit épaulement,
- ladite pièce de liaison et ladite tige comprennent des formes complémentaires formant butées axiales
- ladite pièce de liaison et ladite tige comprennent des formes complémentaires formant butées angulaires,
- ledit capot est encliqueté sur ladite pièce de liaison,
- ladite pièce de liaison comprend des nervures externes, notamment longitudinales, coopérant avec ledit capot pour empêcher une rotation de l'un par rapport à l'autre,
- ledit capot comprend des nervures internes, notamment longitudinales, coopérant avec ladite pièce de liaison pour empêcher une rotation de l'un par rapport à l'autre.

L'invention concerne également un ensemble d'un réceptacle et d'un applicateur tel que décrit plus haut.

Ledit réceptacle pourra comprendre un corps, muni d'un goulot, et un essoreur, monté dans ledit goulot, ladite tige étant avantageusement configurée pour comprimée ledit essoreur contre ledit corps du réceptacle selon une coopération du type cylindre sur cylindre. Il a en effet été constaté, que dans le cas d'une fermeture du réceptacle par l'applicateur à l'aide d'un filet partiel. un tel type d'étanchéité procure de meilleurs résultats qu'une étanchéité du type cône sur cône.

Pour améliorer encore l'étanchéité, ledit essoreur pourra comprendre un bourrelet radial.

L'invention concerne encore un procédé de fabrication d'un applicateur tel que décrit plus haut, ledit procédé comprenant une étape dans laquelle on moule ladite zone d'interface.

Avantageusement, ledit procédé comprend une étape dans laquelle on surmoule ladite zone d'interface sur ladite tige, ceci pour former une pièce de liaison entre ladite tige et ledit capot.

L'invention concerne aussi un dispositif de fabrication pour la mise en œuvre du procédé décrit plus haut, ledit dispositif comprenant un moule muni d'une cavité de moulage de ladite zone d'interface.

Avantageusement, ledit dispositif comprend un poinçon et une matrice définissant ladite cavité de moulage, ladite matrice comprenant des extensions, en forme de créneaux, pour définir ledit filet.

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés :
- la figure 1 illustre en perspective, selon une vue éclatée, un exemple d'ensemble d'un réceptacle et d'un applicateur selon l'invention,
- la figure 2 illustre selon une vue de coupe longitudinale l'applicateur de la figure 1,
- la figure 3 est une vue d'une partie de la figure 2, complétée avec une partie du réceptacle de la figure 1, l'applicateur étant vissé sur ce dernier,
- la figure 4 est une vue en perspective de la tige de l'applicateur de la figure 1, ledit applicateur étant illustré avec sa zone d'interface,
- la figure 5 est une vue de coupe d'après le trait de coupe illustré V-V à la figure 2,
- la figure 6 est une vue de coupe d'après le trait de coupe illustré VI-VI à la figure 3,
- les figures 7a à 7e illustre selon un plan de coupe longitudinale un dispositif de fabrication d'un applicateur conforme à l'invention, selon différentes étapes du procédé de fabrication correspondant.

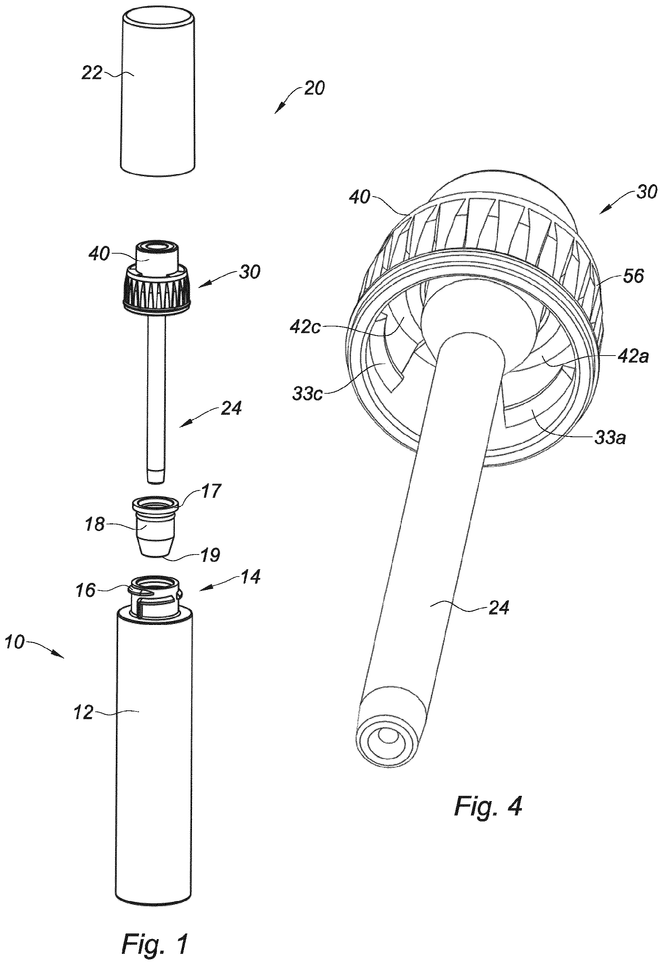

Comme illustré à la figure 1, l'invention concerne un ensemble d'un réceptacle 10 pour produit cosmétique et d'un applicateur 20 dudit produit ainsi que ledit applicateur 20 en lui-même.

Ledit réceptacle 10 pourra comprendre un corps 12 qui s'étend ici suivant un axe d'extension longitudinale et présente une forme sensiblement cylindrique. Ledit corps 12 forme une cavité accueillant ledit produit. Il pourra s'agir de mascara, de baume pour les lèvres ou autre. Ledit réceptacle 10 comprend à l'une de ses extrémités longitudinale un goulot 14, présentant un filet de vissage 16. Ledit filet 16 s'étend ici sur plus d'un tour. Il est avantageusement interrompu pour permettre une indexation angulaire dudit corps 12, notamment dans le but d'y apposer un décor selon un positionnement angulaire choisi.

Ledit corps 12 est avantageusement une pièce rigide. On entend par « rigide », qui n'est ni déformable sous la pression atmosphérique, ni sous une force exercée par les doigts d'un utilisateur. Le corps 20 est, par exemple, à base de matière plastique, notamment de polypropylène. Il est réalisé, notamment, par injection ou injection soufflage. Il pourra être décoré, notamment par métallisation ou autre.

Ledit applicateur 20 est configuré pour être vissé sur ledit réceptacle 10, en particulier au niveau dudit goulot 14. Ledit applicateur comprend un capot 22, destiné à être manipulé par un utilisateur, et une tige 24, destinée à porter un embout applicateur, non illustré, à son extrémité libre. En fonction des applications visées, ledit embout applicateur pourra être une brosse à mascara, une spatule de baume pour les lèvres ou autres. En particulier tout type d'embout applicateur formant brosse à mascara pourra être utilisé ici, que celui-ci soit moulé ou torsadé, à âme droite ou courbée. Lorsque ledit applicateur 20 est vissé sur ledit corps 12, il ferme ce dernier, de préférence de façon étanche, et ledit embout applicateur plonge dans ledit produit.

Ledit capot 22 est avantageusement une pièce rigide. On entend par « rigide », qui n'est ni déformable sous la pression atmosphérique, ni sous une force exercée par les doigts d'un utilisateur. Le capot 22 est, par exemple, à base de matière plastique, notamment de polypropylène. Il est réalisé, notamment, par injection ou injection soufflage. Il pourra être décoré, notamment par métallisation ou autre.

Ladite tige 24 est ici représentée assemblée avec une pièce de liaison 40 qui sera détaillée plus loin. Ladite tige 24 est avantageusement une pièce rigide. Elle pourra être légèrement déformée, notamment courbé, sous l'effet des efforts appliqués lors du maquillage, ceci en raison de sa forme allongée. Ladite tige 24 est, par exemple, à base de matière plastique, notamment de polypropylène.

Le réceptacle 10 comprend en outre ici un essoreur 18 du produit cosmétique, destiné à être fixé dans ledit corps 12 au niveau de son goulot 14. Ledit essoreur 18 est configuré pour racler un excédent de produit cosmétique présent sur l'applicateur 20, en particulier lors du retrait de ce dernier hors du réceptacle 10, notamment à l'aide d'un bord d'essorage 19. Ledit essoreur 18 comprend en outre, par exemple, un épaulement 17 permettant son accrochage sur ledit goulot 14. Ledit essoreur 18 est, notamment, en caoutchouc.

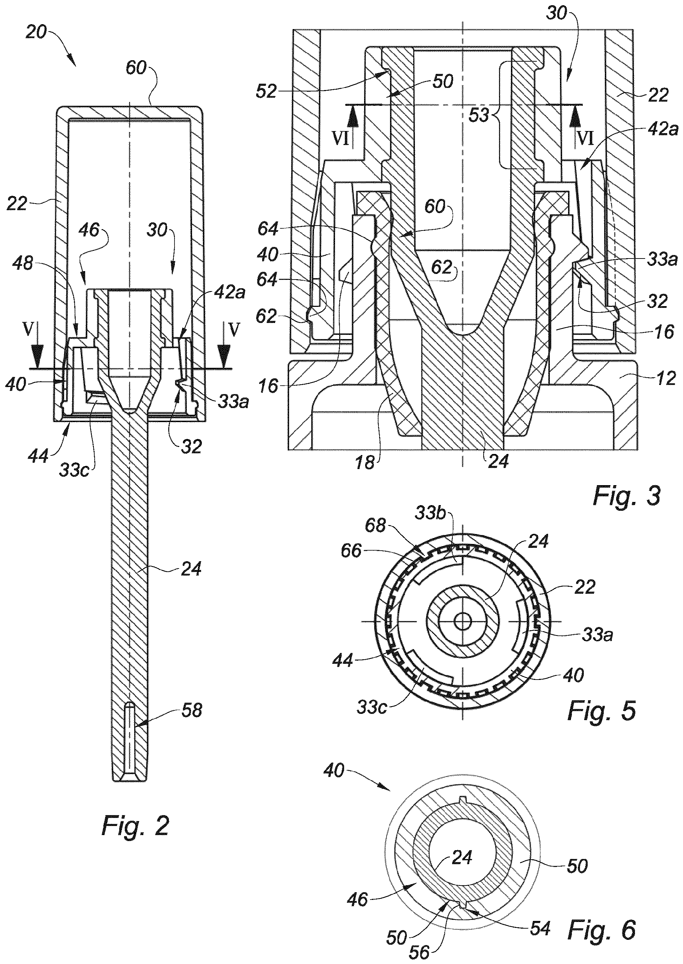

Comme illustré aux figures 2 et 3, ledit applicateur comprend une zone d'interface 30 moulée, notamment par injection, sur laquelle ledit capot 22 et ladite tige 24 sont montés. Ladite zone d'interface 30 porte un filet 32 de vissage dudit applicateur 20 sur ledit corps 14. Ledit filet 32 du réceptacle est destiné à coopérer avec le filet 16 du réceptacle 10. Ledit filet 32 de l'applicateur 20 est ici positionné sur une face intérieure d'une paroi dudit applicateur alors le filet 16 du réceptacle 10 est sur une face extérieure du réceptacle 10.

Selon l'invention, ledit filet forme moins d'un tour. En prévoyant un tel filet, il est possible de mouler la pièce portant ledit filet tout en la démoulant de façon axiale, comme cela est expliqué plus en détail en relation avec les figures 6a à 6e.

Comme mieux illustré aux figures 4 et 5, on constate que ledit filet 32 de l'applicateur 20 est ici angulairement interrompu. Il pourra par exemple comprendre au moins deux tronçons, ici trois tronçons 33a, 33b, 33c, régulièrement répartis sur une périphérie de ladite zone d'interface 30, ici à 120° l'un de l'autre.

Si l'on se reporte de nouveau aux figures 2 et 3, on constate que ladite zone d'interface 30 forme ladite pièce de liaison 40 déjà évoquée. Autrement dit, ledit applicateur 20 comprend une pièce supplémentaire établissant une liaison entre ladite tige 24 et ledit capot 22. De façon avantageuse, ladite pièce de liaison 40 est moulée, notamment surmoulée, sur ladite tige 24. Ceci permet de renforcer l'étanchéité du réceptacle 10, lorsqu'il est fermé par ledit applicateur 20.

Ladite pièce de liaison 40 comprend ici un corps présentant une direction d'extension longitudinale, lesdits tronçons de filet étant formés sur ledit corps. Ledit corps présente en outre un évidement à l'aplomb desdits tronçons, dans ladite direction d'extension longitudinale dudit corps. Sur les figures 2 et 3, un seul 42a desdits évidements, correspondant au tronçon 33a, est visible. Sur la figure 4, deux 42a, 42b desdits évidements, correspondant aux tronçons 33a et 33b, sont visibles. Lesdits évidements sont le résultat du dispositif de fabrication employé, comme cela apparaîtra en relation avec les figures 6a à 6e.

Ledit corps de la pièce de liaison 40 présente, par exemple, une partie distale 44 d'interface avec ledit capot 22 et une partie proximale 46 d'interface avec ladite tige 24. Un épaulement 48 relie lesdites parties d'interface 44, 46, lesdits évidements étant réalisés au niveau dudit épaulement 48. Lesdites parties distale et proximal de ladite pièce de liaison sont, par exemple, de forme cylindrique. Elles sont ici positionnées de façon coaxiale entre elle ainsi qu'avec ladite 24 et ledit capot 22.

Avantageusement, ladite pièce de liaison 40 et ladite tige 24 comprennent des formes complémentaires formant butées axiales. Il s'agit ici d'une bague 50 formé intérieurement dans ladite partie proximale 46 de la pièce de liaison 40 coopérant avec gorge 52 formée dans une extrémité proximale de la tige 24, entre deux flancs annulaires 53 axialement distants l'un de l'autre.

Comme illustré à la figure 6, ladite pièce de liaison 40 et ladite tige 24 pourront en outre comprendre des formes complémentaires formant butées angulaires. Il s'agit ici d'une nervure 54, issue du fond de ladite gorge 52 de la tige 24, coopérant avec une rainure 56 située en vis-à-vis dans la bague 50 de ladite partie proximale de la pièce de liaison 40.

Si l'on se reporte de nouveau aux figures 2 et 3, on constate que ladite tige 24 présente ici une partie de diamètre élargie au niveau de son extrémité proximale. Ladite gorge 52 de la tige 24 est située au niveau de ladite partie de diamètre élargie. L'extrémité distale opposée de ladite tige 24 comprend un logement axial 58 pour la fixation de l'embout applicateur.

Selon un aspect de l'invention, l'étanchéité de la fixation de l'applicateur 20 sur le réceptacle 10 est favorisé en configurant ladite tige 24 pour qu'elle comprime ledit essoreur contre ledit corps 12 du réceptacle 10, en particulier contre un face interne de son goulot 14, selon une coopération du type cylindre sur cylindre. Un tel type d'étanchéité convient particulièrement pour un filet court, comme dans la présente invention. Le contact est ici opéré au niveau de la partie de diamètre élargie, en particulier d'une zone 60 de ladite partie de diamètre élargie située entre l'un 53 des flancs annulaires définissant ladite gorge 52 de la tige 24 et une partie tronconique 62 reliant ladite partie de diamètre élargie au reste de la tige 24.

Dans le même but, ledit essoreur 18 pourra comprendre un bourrelet radial 64, ici orienté extérieurement.

Ledit capot 22 présente une ouverture au niveau de laquelle pièce de liaison 40 est insérée. Ladite pièce de liaison 40 est ainsi située à une extrémité dudit capot 40 axialement opposé à un fond 60 de ce dernier.

Ledit capot 22 est ici encliqueté sur ladite pièce de liaison 40. Ledit capot 22 présente notamment pour cela une gorge annulaire 62 dans laquelle est inséré une bague 64 située à une extrémité axiale de ladite partie distale 44 de la pièce de liaison, opposée à l'épaulement 48. En variante, il pourra s'agir de dents et/ou d'encoches.

Comme cela est mieux visible aux figures 4 et 5, ladite pièce de liaison 40 pourra encore comprendre des nervures externes 66, longitudinales, coopérant avec ledit capot 22 pour empêcher une rotation de l'un par rapport à l'autre. De même, ledit capot 22 pourra comprendre des nervures internes 68, longitudinales, coopérant avec ladite pièce de liaison 40, en particulier ses nervures externes 66, pour empêcher une rotation de l'un par rapport à l'autre.

L'invention concerne également un procédé et un dispositif de fabrication d'un applicateur tel que décrit plus haut.

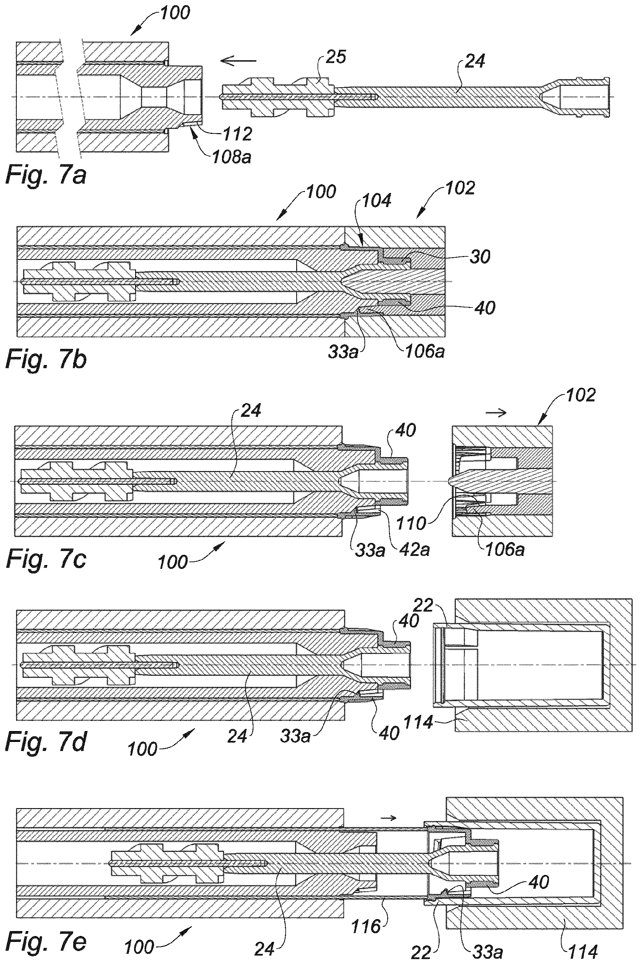

Comme illustré à la figure 7a, ledit procédé comprend tout d'abord, par exemple, une étape d'insertion axiale de la tige 24 de l'applicateur dans une première partie 100 d'un moule dudit dispositif. Ladite tige 24 est ici munie à son extrémité distale d'un embout applicateur 25, représenté de façon schématique.

Comme illustré à la figure 7b, ledit moule est ensuite fermé par une seconde partie 102 pour former une cavité de moulage 104 de ladite zone d'interface 30. Ledit procédé comprend alors une étape dans laquelle on moule ladite zone d'interface 30. Plus précisément, ici, ledit procédé comprend une étape dans laquelle on moule ladite zone d'interface 30 sur ladite tige 24 sous la forme d'une pièce de liaison 40 entre ladite tige 24 et ledit capot 22, ledit capot 22 n'étant pas encore présent à ce stade du procédé de fabrication.

Afin de former ledit filet de la pièce de liaison 40, plus particulièrement lesdits tronçons de filet, ledit dispositif comprend un poinçon définissant ladite première partie 100, et une matrice, définissant ladite second partie 102, ladite matrice comprenant des extensions axiales, en forme de créneaux. Un seul 33a desdits tronçons est ici visible. De même, une seule 106a desdites extensions, correspondant au filet 33a, est ici visible. Ladite extension 106a s'étend en direction dudit poinçon 100 contre lequel elle vient butée axiale au voisinage d'une partie de la cavité de moulage 104 qui sert à mouler ledit tronçon 33a de filet.

Si l'on se reporte de nouveau à la figure 7a, on constate que ledit poinçon comporte des encoches angulaires, une seule 108a étant ici visible, un flanc 110 (visible figure 7c) desdites extensions 106a étant destinées à venir au contact du fond 112 desdites encoches. Au droit de ladite extension 106a, ladite cavité de moulage s'étend entre ladite extension 106a elle-même et une autre partie de la matrice 102 au lieu de s'étendre entre ladite matrice 102 et ledit poinçon 100 ou entre ladite matrice 102 et ladite tige 24, comme dans le reste du moule.

Comme illustré à la figure 7c, ledit procédé comprend une étape ultérieure dans laquelle on ouvre le moule, ceci en retirant la matrice 102, selon une direction axiale, conformément à l'invention. En se retirant, l'excroissance 106a, dégage l'évidement 42a correspondant audit tronçon 33a de filet.

Comme illustré à la figure 7d, ledit procédé comprend une étape ultérieure dans laquelle on rapporte ledit capot 22, par exemple par l'intermédiaire d'un bras robotisé 114.

Comme illustré à la figure 7e, ledit procédé comprend une étape ultérieure dans laquelle on éjecte l'ensemble formé par ladite tige 24 et ladite pièce de liaison 40 hors de la partie du moule comprenant le poinçon, notamment à l'aide d'un éjecteur 116. On met alors en prise ledit capot 22 sur la pièce de liaison 40, ici par encliquetage. Le bras robotisé 114 peut alors manipuler l'applicateur, désormais formé.

## Revendications

1. Applicateur (20) de produit cosmétique, notamment de mascara, ledit applicateur (20) étant configuré pour être vissé sur un réceptacle (10) dudit produit, ledit applicateur (20) comprenant un capot (22), destiné à être manipulé par un utilisateur, une tige (24), destinée à porter un embout applicateur, et une zone d'interface (30), moulée, sur laquelle ledit capot (22) et/ou ladite tige (24) sont montés, ladite zone d'interface (30) portant un filet de vissage (32) dudit applicateur (20) sur ledit réceptacle (10), ledit filet formant moins d'un tour, ledit applicateur (20) comprenant en outre une pièce de liaison (40) entre ladite tige (24) et ledit capot (22), ladite zone d'interface (30) étant formée dans ladite pièce de liaison (40).

2. Applicateur selon la revendication 1 dans lequel ledit filet (32) est angulairement interrompu.

3. Applicateur selon la revendication 2 dans lequel ledit filet (32) comprend au moins deux tronçons (33a, 33b, 33c), régulièrement répartis sur une périphérie de ladite zone d'interface (30).

4. Applicateur selon l'une quelconque des revendications précédentes, dans lequel ladite pièce de liaison (40) et ladite tige (24) comprennent des formes complémentaires formant butées axiales et/ou butées angulaires.

5. Applicateur selon l'une quelconque des revendications précédentes, dans lequel ladite pièce de liaison (40) comprend un corps présentant une direction d'extension longitudinale, ledit filet (32) étant formé sur ledit corps, ledit corps présentant au moins un évidement (42a, 42b) à l'aplomb dudit filet (32), dans ladite direction d'extension longitudinale dudit corps.

6. Applicateur selon la revendication précédente dans lequel ledit corps présente une partie d'interface (44) avec ledit capot (22) et une partie d'interface (46) avec ladite tige (24), ledit corps comprenant un épaulement (48) entre lesdites parties d'interface (44, 46), lesdits évidements (42a, 42b) étant réalisés au niveau dudit épaulement (48).

7. Applicateur selon l'une quelconque des revendications précédentes, dans lequel ledit capot (22) est encliqueté sur ladite pièce de liaison (40).

8. Applicateur selon la revendication précédente dans lequel ladite pièce de liaison (40) comprend des nervures internes (66) coopérant avec ledit capot (22) et/ou ledit capot (22) comprend des nervures externes (68) coopérant avec ladite pièce de liaison (40) pour empêcher une rotation de l'un par rapport à l'autre.

9. Ensemble d'un réceptacle (10) et d'un applicateur (20) selon l'une quelconque des revendications précédentes.

10. Ensemble selon la revendication précédente dans lequel ledit réceptacle (10) comprend un corps (12), muni d'un goulot (14), et un essoreur (18), monté dans ledit goulot (14), ladite tige (24) étant configurée pour comprimée ledit essoreur (18) contre ledit corps (12) du réceptacle (10) selon une coopération du type cylindre sur cylindre.

11. Procédé de fabrication d'un applicateur selon l'une quelconque des revendications 1 à 8, ledit procédé comprenant une étape dans laquelle on moule ladite zone d'interface (30).

12. Procédé selon la revendication précédente, ledit procédé comprenant une étape dans laquelle on surmoule ladite zone d'interface (30) sur ladite tige (24).

13. Dispositif de fabrication pour la mise en œuvre du procédé selon l'une quelconque des revendications 11 ou 12, ledit dispositif comprenant un moule muni d'une cavité de moulage (104) de ladite zone d'interface (30).

14. Dispositif selon la revendication 13, ledit dispositif comprenant un poinçon (100) et une matrice (102) définissant ladite cavité de moulage (100), ladite matrice (102) comprenant des extensions (106a), en forme de créneaux, pour définir ledit filet (32).

## Patentansprüche

1. Applikator (20) für ein Kosmetikprodukt, insbesondere Wimperntusche, wobei der Applikator (20) dafür ausgelegt ist, auf einen Behälter (10) des Produkts geschraubt zu werden, wobei der Applikator (20) eine Kappe (22), die dazu bestimmt ist, von einem Benutzer gehandhabt zu werden, einen Stab (24), der dazu bestimmt ist, eine Applikatorspitze zu tragen, und eine geformte Schnittstellenzone (30) umfasst, an der die Kappe (22) und/oder der Stab (24) angebracht sind, wobei die Schnittstellenzone (30) ein Gewinde (32) zum Aufschrauben des Applikators (20) auf den Behälter (10) trägt, wobei das Gewinde weniger als einen Umlauf bildet, wobei der Applikator (20) weiter ein Verbindungsstück (40) zwischen dem Stab (24) und der Kappe (22) umfasst, wobei die Schnittstellenzone (30) in dem Verbindungsstück (40) gebildet ist.

2. Applikator nach Anspruch 1, wobei das Gewinde (32) winkelförmig unterbrochen ist.

3. Applikator nach Anspruch 2, wobei das Gewinde (32) mindestens zwei Abschnitte (33a, 33b, 33c) umfasst, die an einem Umfang der Schnittstellenzone (30) regelmäßig verteilt sind.

4. Applikator nach einem der vorstehenden Ansprüche, wobei das Verbindungsstück (40) und der Stab (24) komplementäre Formen umfassen, die axiale Anschläge und/oder Winkelanschläge bilden.

5. Applikator nach einem der vorstehenden Ansprüche, wobei das Verbindungsstück (40) einen Körper umfasst, der eine Längserstreckungsrichtung aufweist, wobei das Gewinde (32) an dem Körper gebildet ist, wobei der Körper in der Längserstreckungsrichtung des Körpers senkrecht zum Gewinde (32) mindestens eine Aussparung (42a, 42b) aufweist.

6. Applikator nach dem vorstehenden Anspruch, wobei der Körper einen Schnittstellenteil (44) mit der Kappe (22) und einen Schnittstellenteil (46) mit dem Stab (24) aufweist, wobei der Körper zwischen den Schnittstellenteilen (44, 46) eine Schulter (48) umfasst, wobei die Aussparungen (42a, 42b) im Bereich der Schulter (48) ausgeführt sind.

7. Applikator nach einem der vorstehenden Ansprüche, wobei die Kappe (22) auf das Verbindungsstück (40) eingerastet wird.

8. Applikator nach dem vorstehenden Anspruch, wobei das Verbindungsstück (40) innere Rippen (66) umfasst, die mit der Kappe (22) zusammenwirken, und/oder die Kappe (22) äußere Rippen (68) umfasst, die mit dem Verbindungsstück (40) zusammenwirken, um ein Verdrehen zueinander zu verhindern.

9. Set aus einem Behälter (10) und einem Applikator (20) nach einem der vorstehenden Ansprüche.

10. Set nach dem vorstehenden Anspruch, wobei der Behälter (10) einen Körper (12) umfasst, der mit einem Hals (14) versehen ist, und einen Abstreifer (18), der im Hals (14) angebracht ist, wobei der Stab (24) dafür ausgelegt ist, den Abstreifer (18) gemäß einem Zusammenwirken vom Typ Zylinder auf Zylinder gegen den Körper (12) des Behälters (10) zu drücken.

11. Verfahren zur Herstellung eines Applikators nach einem der Ansprüche 1 bis 8, wobei das Verfahren einen Schritt umfasst, bei dem die Schnittstellenzone (30) geformt wird.

12. Verfahren nach dem vorstehenden Anspruch, wobei das Verfahren einen Schritt umfasst, bei dem die Schnittstellenzone (30) an den Stab (24) angeformt wird.

13. Herstellungsvorrichtung zur Umsetzung des Verfahrens nach einem der Ansprüche 11 oder 12, wobei die Vorrichtung eine Form umfasst, die mit einem Hohlraum zum Formen (104) der Schnittstellenzone (30) versehen ist.

14. Vorrichtung nach Anspruch 13, wobei die Vorrichtung einen Stempel (100) und eine Matrize (102) umfasst, die den Hohlraum zum Formen (100) definieren, wobei die Matrize (102) Erstreckungen (106a) in Form von Zinnen umfasst, um das Gewinde (32) zu definieren.

## Claims

1. Applicator (20) for a cosmetic product, in particular mascara, said applicator (20) being configured to be screwed onto a container (10) of said product, said applicator (20) comprising a cap (22), intended to be manipulated by a user, a rod (24) intended to carry an applicator tip, and a moulded interface zone (30), onto which said cap (22) and/or said rod (24) are mounted, said interface zone (30) carrying a screw thread (32) of said applicator (20) on said container (10), said thread forming less than one turn, said applicator (20) further comprising a connecting part (40) between said rod (24) and said cap (22), said interface zone (30) being formed in said connecting part (40).

2. Applicator according to claim 1, wherein said thread (32) is angularly interrupted.

3. Applicator according to claim 2, wherein said thread (32) comprises at least two sections (33a, 33b, 33c), regularly distributed over a periphery of said interface zone (30).

4. Applicator according to any one of the preceding claims, wherein said connecting part (40) and said rod (24) comprise complementary shapes forming axial stops and/or angular stops.

5. Applicator according to any one of the preceding claims, wherein said connecting part (40) comprises a body presenting a longitudinal extension direction, said thread (32) being formed on said body, said body presenting at least one recess (42a, 42b) plumb with said thread (32), in said longitudinal extension direction of said body.

6. Applicator according to the preceding claim, wherein said body presents an interface portion (44) with said cap (22) and an interface portion (46) with said rod (24), said body comprising a shoulder (48) between said interface portions (44, 46), said recesses (42a, 42b) being made at the level of said shoulder (48).

7. Applicator according to any one of the preceding claims, wherein said cap (22) is snap-fitted on said connecting part (40).

8. Applicator according to the preceding claim, wherein said connecting part (40) comprises inner ridges (66) co-operating with said cap (22) and/or said cap (22) comprises outer ridges (68) co-operating with said connecting part (40) to prevent a rotation of one relative to the other.

9. Assembly of a container (10) and an applicator (20) according to any one of the preceding claims.

10. Assembly according to the preceding claim, wherein said container (10) comprises a body (12), provided with a neck (14), and a wiper (18), mounted in said neck (14), said rod (24) being configured to compress said wiper (18) against said body (12) of the container (10) according to an co-operation of the cylinder-on-cylinder type.

11. Method for manufacturing an applicator according to any one of claims 1 to 8, said method comprising a step wherein said interface zone (30) is moulded.

12. Method according to the preceding claim, said method comprising a step wherein said interface zone (30) is overmoulded on said rod (24).

13. Manufacturing device for the implementation of the method according to any one of claims 11 or 12, said device comprising a mould provided with a moulding cavity (104) of said interface zone (30).

14. Device according to claim 13, said device comprising a stamp (100) and a matrix (102) defining said moulding cavity (100), said matrix (102) comprising extensions (106a), in the form of slots, to define said thread (32).
